# EUROPEAN PATENT APPLICATION

(11) **EP 1 574 476 A1**
(43) Date of publication of application: **14.09.2005**
(21) Application number: 05004224.1
(22) Date of filing: 25.02.2005
(51) Int. Cl.: C01B 25/22, C01B 25/225

(54) **Process and apparatus for producing phosphoric acid**

(30) Priority: 08.03.2004 BR 0400875
(71) Applicant: COPEBRAS LTDA, Cep: 11510 - 970 (BR)
(72) Inventor: Falino, Michelangelo Rua Waldomiro Silveira, 17, Sao Paulo (BR); Silva, Roberto Mattioli, Bairro Santo Antonio cidade de Araxa (BR)
(74) Representative: Alves Moreira, Pedro

(57) **Abstract**

A process and apparatus for producing phosphoric acid by the wet way procedure upon attacking phosphates with sulphuric acid and comprising a reaction system provided with three serial reactors, subdivided into two processing zones - attack and maturation - integrated to a system of cooling by phosphoric pulp circulation; in such apparatus for phosphoric acid production, feeding of two or more phosphates is enabled either alone or simultaneously; such process of phosphoric acid manufacturing, quite developed in Brazil, is flexible enough to process phosphates with largely variable mineralogical, chemical and physical properties, as is the case of Brazilian phosphates.

## Description

The main purposes of any method for the wet way production of phosphoric acid from sulphuric acid and phosphate concentrates are (i) obtaining phosphoric acid at the highest possible concentration (ii) minimizing P₂O₅ losses in phosphogypsum and (iii) producing highly filtrable calcium phosphate crystals.

Several are the factors affecting the process for obtaining phosphoric acid by the wet way procedure via the sulphuric route:
. phosphate geological origin
. phosphate mineralogical composition;
. phosphate granulometrical distribution
. operational conditions during processing;
. configuration of phosphate attack reactors and
. crystalization of resulting calcium phosphate.

In wet way processes using sulphuric acid as an attacking agent, the crystal structure of the phosphatic rock is destroyed and the P₂O₅ therein contained is put into solution as phosphoric acid - H₃PO₄.

The phosphate being attacked by the sulphuric acid is a topochemical chemical, solid-liquid reaction which results in a reactive pulp basically constituted of calcium sulphate and phosphoric acid crystals, according to the following overall reaction:

Ca₁₀(PO₄)₆F₂ + 10 H₂SO₄ + 10 H₂O = 6 H₃PO₄ + 10 CaSO₄.nH₂O + 2HF

wherein n = 2, 1/2 or 0.

The precipitates of calcium phosphate found in the phosphoric medium may have several hydration degrees, depending on P₂O₄ concentration and reaction medium temperature. The physicochemical conditions of the processing environment where the phosphatic rock is solubilized promote calcium precipitation predominantly in one of the following crystalline phases:
. anhydrite (AH) - CaSO₄
. hemihydrate (HH) - CaSO₄.1/2 H₂O
. dihydrate (DH) - CaSO₄.2H₂O phosphogypsum

The calcium phosphate so formed as anhydrite (AH), hemihydrate (HH) or dihydrate (DH) is then separated from the resulting phosphoric acid by means of a conventional unit operation of solid-liquid separation (filtration, centrifugation, etc.).

Combination of operational conditions of attack/crystallization and number of calcium sulphate separation unit operations gives rise to a great number of possibilities of acid phosphoric production routes, that may be classified in relation to:
i. the number of solid-liquid separation operations;
ii. the number of calcium sulphate crystal forms (AH, HH and DH) and
iii. the number of resulting acids.

In the phosphoric acid reactor, the reaction medium tipically shows a low pH (<5 and a high electrochemical potential Eh (700 to 1000mV). In such conditions, the phosphoric and hydrofluoric acid are found in their molecular forms - H₃PO₄ and HF; the sulphuric acid in turn is found in a dissociated form as shown in Table 1 - Constants of acid dissociation at 25°C.

| **Acid** | **Formula** | **pK**_{**1**} | **pK**_{**2**} | **pK**_{**3**} |
|---|---|---|---|---|
| Sulphuric | H₂SO₄ | -3 | 1, 99 | - |
| Phosphoric | H₃SO₄ | 2,15 | 7,20 | 12,38 |
| Hydrofluoric | HF | 3,18 | - | - |

The phosphatic rock (apatite concentrate) is mainly composed of fluorapatite. From the minerals found therein, the fluorapatite makes up more than 85%. The apatite solubilization in the phosphoric acid reactor may be represented by the main chemical reaction hereinbelow described occurring simultaneously:
i. dissolution of sulphuric acid in the reaction medium:

   10 H₂SO₄ = 10H⁺ + 10HSO₄⁻
ii. apatite solubilization by H⁺ ions

   Ca₁₀(PO₄)₆.F₂ +20H⁺ = 6H₃PO₄ + 10Ca² + 2HF
iii. precipitation of calcium by sulphate

   10Ca² + 10HSO₄⁻ + 10xH₂O = 10CaSO₄.xH₂O + 10H⁺
wherein x = 0 (anhydrite), 1/2 (hemihydrate) or 2 (dihydrate).

As already mentioned above, such three reactions may grouped in one simplified equation:

Ca₁₀(PO₄)₆.F₂ + 10H₂SO₄ + 10xH₂O = 6H₃PO₉ + 10CaSO₄.xH₂O + 2HF

The resulting calcium sulphate - CaSO₄.xH₂O - may crystallize at several hydration levels, producing anhydrite (x = 0), the hemihydrate (x = 1/2) and dihydrate (x = 2), the latter being known as phosphogypsum.

In processes for wet way production of phosphoric acid by the dihydrate route (DH), the reactors generally run at temperatures ranging from 75-80°C and at a P₂O₅ concentration of in acid ranging 28 to 30%, so as to obtain calcium sulphate in its dihydrated form - CaSO₄.2H₂O. In processes conducted via the hemihydrate route - CaSO₄.1/2H₂O, the P₂O₅ concentration in acid ranges between 45 to 50% and the reactor operates at temperatures ranging from 90 to 100%. In the anhydrite route, the reactors were run with heat addition at temperatures ranging from 125 to 135°C, for acid with 40-45% P₂O₅ .

The other minerals found in the apatite concentrate containing contaminants as silica, iron, aluminum, alkali, among others, will be partially or fully solubilized during the attack, depending on its mineralogical properties and reactivity. The hydrofluoric acid produced in the fluorapatite solubilization will react with the silica-containing minerals, as follows:

4HF + SiO₂ = SiF₄ + 2H₂O

3SiF₄ + 2H₂O = 2H₂SiF₆ + SiO₂

Some of the SiF₄ generated from the attack on the phosphate rock is volatized in the reactor and the most part thereof is hydrolysed producing fluorosilicon acid - H₂SiF₆. Some of this fluorosilicon acid precipitates as sodium/potassium fluorosilicate or is complexed as calcium fluorosilicates and aluminosilicates which remain into the resulting calcium sulphate.

During calcium sulphate precipitation, some of the P₂O₅ of the acid medium is cocrystallized generating P₂O₅ losses. This is caused by the competition between H₂PO₄⁻ and HSO₄⁻ , as shown below:

Ca² + H₂PO₄ + 2H₂O = CaHPO₄.2H₂O + H⁺

The losses of cocrystalized P₂O₅ can be minimized by increasing the sulphate level in the reaction medium. Nevertheless, the increase in the sulphate level causes a raise in the precipitation rate of calcium sulphate which starts to settle strongly not only on the crystal surface but also on the phosphate rock particle surfaces, creating a layer which restrains the chemical attack from progressing and generating losses of "unattacked" P₂O₄ or by blocking. Such effect is more evident in the granulometric distribution coarse fraction particles of the phosphate rock. In this way, the determination of the sulphate level in the phosphoric acid reactor should seek a solution appropriate to minimize the overall P₂O₅ losses - in its cocrystallized, unattacked and soluble forms.

The losses of soluble P₂O₅ are the result of a poor calcium sulphate crystallization which gives rise to improper granulometrical profiles and low performance during the filtration step caused by operations at inadequate sulphate levels in the reaction medium.

In general, the apatite concentrate is composed by granulometrical fractions with distinct chemical and mineralogical compositions. Generally, a tendency is observed of impurities and contaminants concentrating in finer fractions. Due to this diversity in granulometrical fraction compositions, their behaviour during the solubilization process is also distinct in terms of specific sulphuric acid and fosfate rock consumptions. The finer and more contaminated granulometric fractions with poorer P₂O₅ contents account for significant increases in sulphuric acid consumption of sulphuric, during H₃PO4 manufacturing.

Generally, the influence of the main mineral contaminants on the apatite concentrate may be summarized as follows:
a). iron minerals: increase the specific consumptions and operational cost;
b). magnesium carbonates: increase the sulphuric acid consumptions and affect the calcium sulphate crystals;
c). micaceous minerals: affect the calcium sulphate crystallization and reduce the phosphoric plant productivity;
d). barite: reduces the P₂O₅ content of the concentrate, increasing the operational costs.

The aspects associated with corrosivity (excess of free HF) and with poor crystallization (excess of reactive silica) should also be noted, one of the most important factors for a satisfactory processing being the adequate balance of (SiO₂+Al₂O₃)/f ratio in the phosphate concentrate. It is important to also emphasize that the phosphate rocks of igneous origin tend to show high strontium contents which has been found to inhibit the recrystallization of hemihydrate to dihydrate, together with the rare earths (TR). For the Kola phosphate, the kinetics of hemihydrate/dihydrate recrystallization requires a 48 to 72 hour period, while for the Morocco phosphate this period ranges from 0,5 to 1 hour.

Nevertheless, due to its simplicity and low investment levels, the dihydrate route has been the most widespread one in commercial terms for the manufacturing of phosphoric acid intended for use in fertilizers or even special phosphates.

The design and operation of industrial equipment in which chemical reactions are carried out require analysis of the chemical and physical processes involved. The principles ruling the operations of mass and energy transfers are as important as those which govern the chemical kinetics. The proper combination of chemical and physical operations is of great importance for achieving a reaction system with a satisfactory performance. In reactor design the following factors are to be considered: (i) type and size required; (ii) supplies for heat exchange; and (iii) supplies for operational conditions control (flows, temperature, pressure, chemical composition, etc.). These activities are designated as reaction system process design.

A cost analysis to establish the most profitable design raises additional issues on construction materials, corrosion, maintenance and utilities required. Operational costs reduction of the reaction system depends directly on instrumentation resources and the philosophy of control. The design of an industrial reactor is not a routine work and several reactor conceptions may exist for the same process. It is not always the investment in the reactor that should be minimized. A certain processing route might include a low investment cost reactor however demanding reaction product separation operations that could be even more expensive than other designs and for this reason the decision should be oriented considering the process as a whole.

In contrast with merely physical processes, chemical conversion outstands as process for generally involving great power consumption or release. Also, the reaction rate as well as the reaction direction are highly dependent on the operational conditions, such as temperature, residence time, etc. For heterogeneous reactions, in which solid and imiscible fluid phases are present, good blending and dispersion should be provided in order to enhance the contact interface area.

The design and operation form for a phosphoric acid plant reaction system is determinant to achieve satisfactory operational availability and productivity rates, high P₂O₅ recovery rates and proper quality end products. The main objects to be achieved in the reaction system of a acid phosphoric plant are: (i) attack efficiency as higher as possible through maximum P₂O₅ solubilization in the phosphate rock and (ii) production of large and homogeneous calcium phosphate crystals to assure an easy and effective filtration of phosphoric acid.

In a phosphoric acid industrial plant, the reaction system constitutes one of the largest process parts of the unit. In most cases it is made of reinforced concrete, being internally coated with an acid-resistant membrane (rubber and/or resins) and an overlying layer of graphite bricks which provides protection against abrasion and attack to the acid medium. Such form of construction causes reactors to be equipment with the best useful life in a phosphoric acid plant, but difficult to operate and expensive in case modifications are required. The conception of the reaction system may be considered the core of phosphoric acid production technologies, since it incorporates and reflects the process philosophy as a whole, and makes it a distinctive factor in relation to the several routes already in use.

The reaction system of a phosphoric acid plant with a single calcium sulphate separation stage can be composed of: (i) multitanks; (ii) multichambered reactor and (iii) monotank reactor (single tank). Combinations among such conceptions are also possible, such as, multichambers/monotank, multichambers/multitanks and multichambers/multichambers among others. The processes for phosphoric acid manufacturing differ basically in relation to the reactors conception.

Turning back to the objects to be pursued in a phosphoric acid plant, the following are to be pointed out:
a). obtaining highly filterable gypsum crystals to ensure productivity;
b). obtaining the first filtrate at a as higher as possible concentration of P₂O₅, so as to reduce the steam consumption during the concentration step;
c). high reaction, filtration and overall yields in terms of P₂O₅ recovery;
d). high electromechanical availability and unit utilization rates;
e). reduction of production costs.

Many are the parameters affecting the performance of the phosphoric acid reactor, such as granulometry and phosphate rock reactivity, sulphate level and phosphoric pulp temperature, stirring rate and residence time in reactor, among others. However, the operation should be focused on obtaining highly filterable phosphogypsum crystals, so that filter can operate at high filtration rates and high soluble P₂O₅ recovery rates, in order to maximize the productivity and cut down industrial costs.

If a phosphate rock with an acceptable affinity for the phosphoric acid is considered among the aforementioned parameters, the residence time of the phosphoric acid reactor is of singular importance, because the longer it is the higher will be the solubilization yields (lower unattacked P₂O₅ losses) and the better will be the phosphogypsum filterability.

The residence time of a phosphoric acid reactor is associated with the specific volume of reaction (V.E.R.) expressed in m³/t/day of P₂O₅ produced. By raising the residence time, the V.E.R. and the solubilization yield are also increased (reaction). When the sulphate (SO₄) level and the residence time are raised, the filterability of phosphogypsum crystals is increased, being expressed in t/day x m² of P₂O₅ produced.

The monotank reactors são designed to operate with V.E.R. in the range of 1,2 to 1,7 m³/tpd P₂O₅. Generally, they are equipped with a single central high-performance hydrofoil type stirrer with capacity to circulate all the reaction pulp contained inside the reaction within a period of about 25 seconds. The monotank reactors are generally air cooled by helical screw type surface stirrers which sprays vertically the phosphoric pulp which promotes a strong contact with the cooling air.

The multichambered reactors are generally designed to operate with V.E.R. in the range of 2,0 to 2,8 m³/tpd P₂O₅. Each chamber is equipped with its own stirrer and generally the removal of reaction heat is carried out by means of a vacuum cooler.

The cascade-arranged multitank type reaction systems can be composed of 2 to 8 serial stirred reactors. In general, the Brazilian phosphate of igneous origin has the following characteristics:
a). low reactivity;
b). generally a granulometry ranging from 30% to 90% when passing through a 200 Tyler mesh (0,074 mm);
c). broad granulometrical distribution;
d). blocking sensitivity through calcium phosphate deposition on the phosphate grains;
e). difficult sulphate level control due to the blocking sensitivity;
f). growth of calcium sulphate crystals which are sensible to the sulphate and P₂O₅ contents in the phosphoric pulp, to the residence time and to the reaction temperature;
g). tendency to show high P₂O₅ losses due to cocrystallization;
h). presence of unusual impurities and variations in the phosphate mineralogical composition;
i). chemical composition heterogeneity of granulometrical ranges.

It is inferred from items from "a" to "e" that a reaction system is desirable to operate the phosphate solubilizations at a high retention time and under a medium free su lphate content. It is also desirable to maintain the attack conditions under a high grade of homogeneousness, in order to avoid segregated concentration regions, which give rise to adverse solubilization and crystallization conditions. The solubilization stirring system should have a sufficient intensity so as to quickly disperse the phosphate in the reaction mass. It is also inferred from items "a" to "f", that a need exists of a reaction volume that is larger than those conventionally used. Since the growth of calcium sulphate crystals and the P₂O₅ recovery are impaired by the low level of sulphate in the phosphoric pulp ("f" to "g"), reaction environments operating with medium to high sulphate contents are desirable so as to improve the crystal properties and minimize P₂O₅ losses by cocrystallization. The items from "a" to "i" show the need of a reaction system with flexible operational conditions in order to achieve optimum conditions and minimize production costs.

Considering these outstanding properties of Brazilian phosphates and certain limitations of the current processing routes for phosphoric acid production, a process and an apparatus of high flexibility have been developed making possible operations under more favorable conditions for the production of phosphoric acid at a more concentrated level, with lower P₂O₅ losses, good calcium sulphate crystels, such process and apparatus being appropriate to process phosphates with distinct chemical and granulometrical compositions, as is the case of the Brazilian phosphates. The main features of the process object of this invention are the following:
a). multitank type reaction system, composed of three serial tanks, subdivided in two distinct processing zones, designated as follows:
   - attack : in which phosphate solubilization and calcium sulphate precipitation are carried out, being composed of the first two tanks;
   - maturation : composed by the third tank, operating at slightly lower temperatures for reducing the tendency of phosphoric pulp to crust and also intended for desulphating operations when required;
   - attack/maturation volumetrical ratio ranging from 2 to 4:1;
   - reaction specific volume ranging from 2,4 to 3,3 m³/t/day of P₂O₅ produced;
b). reaction system composed of three serial tanks, which are integrated as follows:
   - the first two tanks equipped with internal circulation of 100 to 150 renewals/hour and recirculation of the second to the first one, which corresponds to 2 to 8 renewals/hour;
   - the third tank, operating independently of the first two tanks, with an internal circulation of 100 to 150 renewals/hour;
c). heat removal of reaction by means of a vacuum cooling apparatus with a pulp flow from the second to the first reactor and a temperature differential from 1 to 2°C between the inlet and outlet, so as to maintain the reaction under 75-80°C;
d). operational flexibility for processing phosphates with varying properties or even distinct phosphates fed simultaneously.

Industrial practice has shown that the conception of serial reactors for processing igneous phosphate concentrates in the production of phosphoric acid via dihydrate provides high productivity and P₂O₅ recovery rates. As shown in Table 2, the concept application of three serial reactors and the high specific volume of reaction is applied in a phosphoric acid plant operating with Catalan igneous phosphate provided an improvement in the productivity and industrial yield rates if compared with the conventional reaction systems.

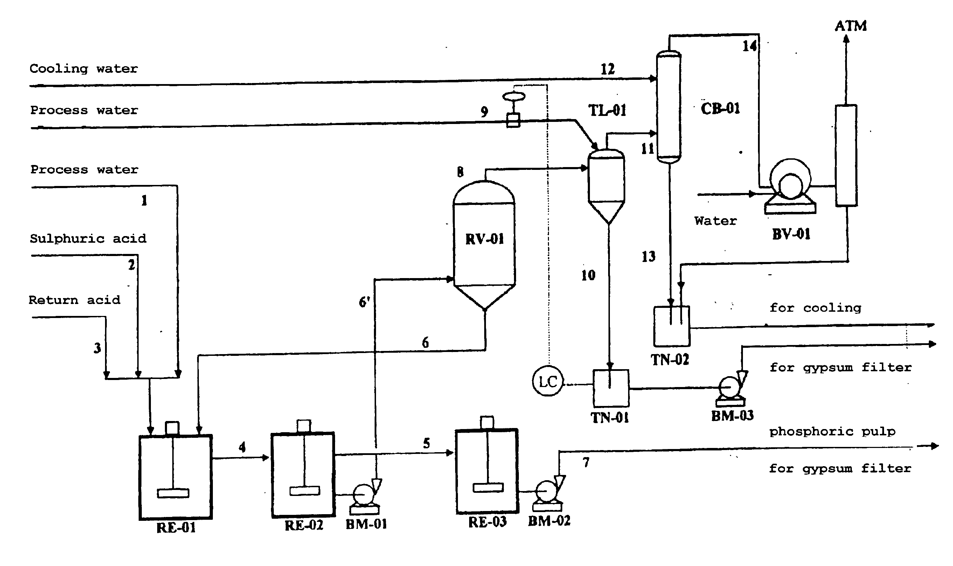

In this three-reactor reaction system, the heat removal from the reaction is carried out by means of a vacuum cooler which ensures a proper control of the attack temperature and crystallization. In this processing circuit (Figure 1), object of this invention, the phosphate (1) is fed to the first reactor (RE-01) together with the blend of sulphuric acids (2) and return phosphoric acid (3). The resulting phosphoric pulp (4) flows over the second reactor wherein the phosphate attack is being carried out. Such two first reactors are integrated by the pulp circulation (6-6') which is pumped (BM-01) to the vacuum cooler (RV-01). Vapours proceeding from the cooler (8) are treated in a gas scrubber (TL-01) for purging removal and fluorine absorption with water. The resulting liquor (10) is sent to the phosphogypsum filter for mesh washing and subsequently for calcium sulphate cake washing. A fluid level controller (LC) regulates the inlet of process water in gas scrubber (9). Then the washed vapours (11) and the cooling water (12) enter into the barometrical condenser (CB-01) and through volume shrinkage, vacuum is generated in the system. The removal of noncondensing materials (14) is carried out by a vacuum pump (BV-01). The resulting hot water (13) returns to the cooling system. The sealing tanks (TN-01 and TN-02) ensure the flow of fluids throughout the barometrical legs without vacuum break in the system. Following, the phosphoric pulp of the second reactor (5) flows over the third reactor (RE-03) and is sent therefrom to the phosphogypsum filter (7).

**TABLE 2 -**

| **PHOSPHORIC ACID REACTION SYSTEMS AND INDUSTRIAL YIELDS** | | | | |
|---|---|---|---|---|
| | **IGNEOUS PHOSPHATE ROCK** | | | |
| **PARAMETERS** | **UNIT** | **A** | **B** | **COPEBRAS** |
| **PHOSPHATE ORIGIN** | | **IGNEOUS** | **IGNEOUS** | **CATALAN** |
| *Chemical Composition* | | | | |
| P₂O₅ | % | 37 | 35 | 37,2 |
| CaO | % | 50 | 47 | 50,1 |
| Fe₂O₃ | % | 2,4 | 3, 3 | 2, 1 |
| *Ratios* | | | | |
| CaO/P₂O₅ | t/t | 1,36 | 1,33 | 1,35 |
| Granulometry | | | | |
| +100# (Tyler) | % | 13,7 | 19,9 | 15,8 |
| +200# (Tyler) | % | 49,8 8 | 56,9 | 54,0 |

| **INDUSTRIAL REACTOR** | **3 TANKS** | | | |
|---|---|---|---|---|
| Effective volume | m³ | | | 1.140 |
| Specific volume | m³/t/ day P₂O₅ | 2,42 | 1,21 | 2,71 |
| Sulphate content | g/l | 27 | 38 | 25 |
| P₂O₅ content in acid | g/l | 399 | 355 | 384 |
| Solid contents in pulp | % | 29 | 36 | 32 |
| Reactor temperature | °C | 77 | 80 | 76 |

| **FILTRATION** | | | | |
|---|---|---|---|---|
| Filtration rate | ^{t} P₂O₅/ _{day/m}2 | 4,9 | 6,6 | 6,7 |
| Filter effective cycle | min | 3,1 | 1,2 | 1,5 |

| **PHOSPHOGYPSUM** | | | | |
|---|---|---|---|---|
| Ratio: gypsum/ P₂O₅ | t/t | 4,38 | 4,43 | 4,42 |
| Total P₂O₅ | % | 0,69 | 1,93 | 0,55 |
| P₂O₅ water | % | 0,29 | 0,72 | 0,05 |
| Insoluble P₂O₅ | % | 0,40 | 1,21 | 0,50 |

| **YIELDS** | | | | |
|---|---|---|---|---|
| Reaction (R) | % | 98,2 | 94,6 | 97,8 |
| Filtration (F) | % | 98,7 | 96,8 | 99,8 |
| Manufacturing (R+F) | % | 97,0 | 91,5 | 97,6 |

## Claims

1. A process and apparatus for producing phosphoric acid, **characterized by**:
a) being constituted of a mechanically stirred multitank reaction system composed by three serial tanks, subdivided into two distinct processing zones of variable lenght designated attack zone and maturation zone;
b) being the attack zone formed by the first two tanks, in which the operations of phosphate solubilization and calcium sulphate precipitation are carried out and which operates at temperatures ranging from 75 to 80°C with a free sulphate content from 20 to 35 g/l, P₂O₅ from 27 to 31% w/w and solids from 28 to 40% w/w;
c) being the maturation zone provided with a third stirred tank operating at temperatures ranging from 70 to 77°C; with a free sulphate content of 20 to 35 g/l, P₂O₅ from 27 to 31% w/w and solids from 28 to 40% w/w and intended for reducing the tendency of phosphoric pulp to crust, such maturation zone also performing desulphating operations;
d) having a volumetric ratio between the attack and maturation zones of 2 to 4:1;
e) having a specific reaction volume of 2,4 to 3,3 m³/t/day of P₂O₅ produced;
f) being the first two tanks provided with an internal circulation of 100 to 150 renewals/hours, the recirculation of the second to the first tank corresponding to 2 to 8 renewals/hours;
g) the third tank being positioned independently in relation to the first two tanks and operating with an internal circulation of 100 to 150 renewals/hours;
h) the heat removal from the reaction being performed by means of a vacuum cooler with pulp flowing from the second to the first reactor and temperature differential from 1 to 2°C between the inlet and outlet, so as to maintain the reaction under 75-80°C;
i) providing industrial yields from 96,0 to 97,6%, as recovery of apatite P₂O₅ fed to the reaction system;
j) providing filtration rates from 6 to 7 t/day.m² of P₂O₅ produced.

2. Process and apparatus as claimed in claim 1, **characterized** having flexibility to control the reaction temperature by heat removal with vacuum coolers and cooling air, simultaneously.

3. Process and apparatus as claimed in claim 1, **characterized by** permitting different phosphate feeds, either alone or simultaneously in several proportions, combinations and distinct points of the reaction system, according to the behaviour and granulometry of phosphates, in order to achieve jointly ideal points for P₂O₅ extraction and crystallization of calcium sulphate. Such phosphates may be of the same or totally distinct origins.

4. Process and apparatus as claimed in claims 1, 2 or 3, **characterized by** combining such items in a singular manner and gathering them altogether in a single assembly.
